**Europäisches Patentamt**

**European Patent Office**

**Office européen des brevets**

(19)

(11) Publication number: **0 088 580**

**B1**

(12) # EUROPEAN PATENT SPECIFICATION

(45) Date of publication of patent specification: **09.09.87**

(51) Int. Cl.⁴: **A 01 J 5/08**

(21) Application number: **83301086.1**

(22) Date of filing: **01.03.83**

(54) **Teat cup for a milking machine.**

(30) Priority: **04.03.82 SE 8201338**

(43) Date of publication of application:
**14.09.83 Bulletin 83/37**

(45) Publication of the grant of the patent:
**09.09.87 Bulletin 87/37**

(84) Designated Contracting States:
**CH DE FR GB IT LI NL**

(56) References cited:
**GB-A- 394 983**
**GB-A- 737 834**
**SE-C- 159 259**
**US-A-2 545 857**
**US-A-2 687 773**

(73) Proprietor: **ALFA-LAVAL AB**
**Box 500**
**S-147 00 Tumba (SE)**

(72) Inventor: **Tonelli, Guido Antonio**
**Puckvagen 14**
**S-151 59 Sodertalje (SE)**

(74) Representative: **Simpson, Ronald Duncan Innes et al**
**A.A.Thornton & Co. Northumberland House**
**303-306 High Holborn**
**London WCIV 7LE (GB)**

Courier Press, Leamington Spa, England.

EP 0 088 580 B1

## Description

The present invention relates to a teat cup assembly which is provided with a teat cup liner within the teat cup shell, connection pieces for pulsating vacuum and milk transporting vacuum respectively, and a valve means which is arranged to close the connection between the interior of the teat cup liner and the milk transport line in the event of the teat cup falling away from the teat during vacuum milking, the valve comprising a permanently open restricted passage to connect the interior of the liner with the milk transport line even when the valve is closed, so that on positioning the assembly over a teat, pressure within the liner is reduced by air being extracted through the passage causing the valve body to be unseated and move to its open position.

In British patent specification GB—A—737 834 there is described a teat cup assembly which is provided with a valve means which automatically hinders large amounts of air from being sucked into the milk transport line. The valve means works vertically in the teat cup and its valve body, a piston, abuts at its lower end against a valve seat. A small hole is provided through the piston. The valve means is also provided with resilient means which aims at lifting the piston away from the valve seat. Should the teat cup fall off during milking, air rushes in and the valve body is forced against its seat and closes the connection to the milk transport line. When the teat cup is attached to the cow again, the space around the teat is evacuated and the piston is urged away from the valve seat by means of the spring force, and milking may then be resumed.

The teat cup assembly which is known through the British patent specification has, however a number of disadvantages. The valve body is situated in the path of the milk flow and hinders it. The milk is collected in the cup shaped upper part of the piston and not until this has been filled can milk pass through the space between the wall of the teat cup and the piston. Should the opening through the piston be clogged, the valve means no longer opens automatically. The usual cleaning after milking becomes very difficult with such a teat cup, since the piston and the springs are very difficult to clean, due to their shapes.

The present invention provides a teat cup assembly which is characterised in that the teat cup liner includes a space situated out of the path of the milk flow for accommodating the valve body in its open position so that it presents no obstruction to the flow of milk from the interior of the liner to the milk transport line, and that the permanently open restricted passage is formed in the sealing surface between the valve body and its valve seat to achieve a self-rinsing effect. With this arrangement, the valve body is held against the milk line inlet when vacuum is present in the milk line and for as long as the interior of the liner is open to atmosphere, when the teat cup is attached to a teat, air is evacuated through the restricted passage until the pressure in the teat cup is approximately equal to that in the milk line, whereupon the valve body is urged to its open position to permit milking to commence. In its open position, the valve body presents substantially no hindrance to the flow of milk from the teat cup to the milk lines, and thus reduces the risk of vacuum fluctuations within the liner which might disturb milking.

By forming the restricted passage in the sealing surface between the valve body and its valve seat, milk flowing past the sealing surface tends to wash away any small particles which might otherwise block the restricted passage. Upon detachment of the teat cup from the teat, the inrush of air causes the valve body to re-close and isolate the milk line from the interior of the teat cup once more.

The teat cup is preferably so designed that the area available for milk passing the valve body is at least as great as the cross-section area of the connection piece to the milk transport line.

In the teat cup assembly described below, the valve housing is formed as an integral part of the teat cup liner. This facilitates a simple design without complicated separate parts which must be assembled together.

Preferably, the valve body is formed with a spherical surface to abut against a circular valve seat which consists of a part of the teat cup liner or the teat cup. In one preferred embodiment the valve body consists of a ball and the valve seat consists of the connection piece to the milk transport line. A valve body in the form of a ball incurs great advantages from a hygienic standpoint.

In order to obtain the secure proper opening of the valve, the teat cup is so designed that movement of the valve body to its open position takes place under the influence of a force which works in the opening direction of the valve body. This force may consist, for example, of gravity or a magnetic force.

In order to secure the free flow of the milk the connection piece of the milk transport line is preferably arranged at an angle to the longitudinal axis of the teat cup. Of course it is also possible to arrange the valve means such that it may be opened and closed manually.

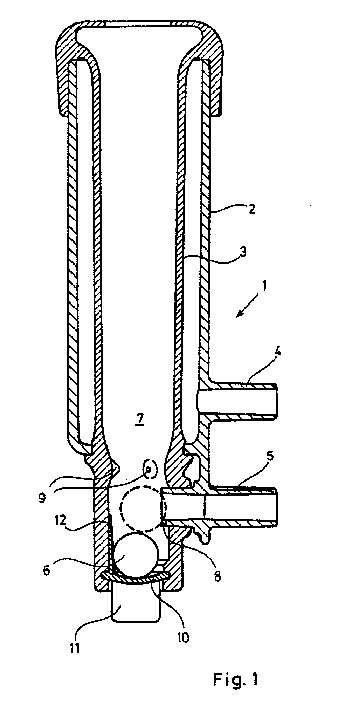

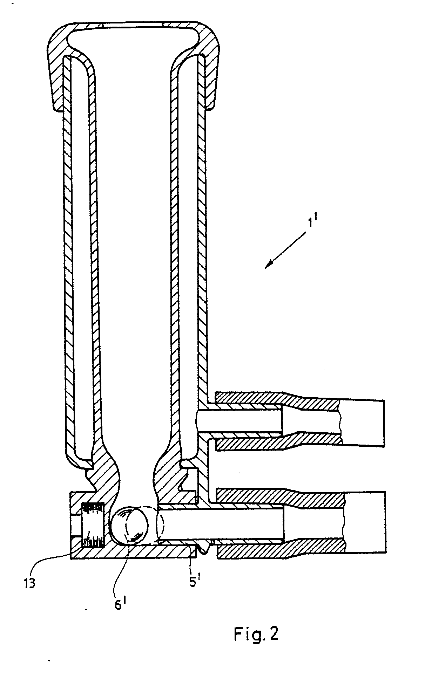

The invention will be described further with reference to the attached drawing, Figure 1 and 2 of which show two examples of teat cups according to the invention, both in axial cross-section.

In Figure 1 there is shown a teat cup assembly 1 comprising a casing 2, in which there is a liner 3. The teat cup has also connection pieces 4, 5 to a pulsating vacuum source and to a milk transport vacuum source. In the bottom of the teat cup there is a valve means comprising a valve body consisting of a ball 6 which, in its closed position, abuts against a valve seat formed by the circular inner end of the connection piece 5 to the milk transport line. The closed position of the valve is shown by a dashed line on the drawing. Between the ball 6 and the valve seat there is a restricted passage 8, formed by a groove in the valve seat of the connection piece. Below the connection piece 5 there is a space in the liner to accommodate the ball 6. The liner is also provided with small projections 9 above the connection piece. These projections 9 prevent the ball from falling out of the teat cup if it should be turned upside down. In the bottom of the teat cup there is a rotatable bottom plate 10. This plate which is provided with a small handle 11 carries a peg 12 on its upper part.

When milking is to be commenced, the milking machine and the milk transport line are connected to a stationary pipe line, which in its turn is connected to a vacuum pump. The ball 6 is sucked against the connection piece 5 as soon as vacuum prevails in the milk flow line and it is only through the passage 8 that atmospheric air may be sucked into the milk flow line. The operative attaches the teat cups to the teats, whereupon the space under the teat is very soon evacuated through the passage 8 so that an adjustment to match the milking vacuum is obtained in the interior of the teat cup. The ball 6 then falls down to the bottom of the teat cup and the milk may be transported away through the milk flow line. During milking, the ball rests on the bottom of the teat cup, but if the teat cup for some reason should fall away from the teat cup during the milking, the ball 6 immediately closes the connection to the milk flow line, to ensure that substantially no air or particles such as dust are sucked into the milk. The projections on the teat cup ensure that the ball cannot in any event fall out through the upper opening of the teat cup.

The teat cup shown in Figure 2 has also a valve body in the form of a ball $6^1$, but in this case the movement of the ball in the opening direction takes place under the influence of a magnet 13. The ball $6^1$ is, as has been described above, sucked to the connection piece $5^1$ when vacuum prevails in the milk flow line. When the teat cup has been attached to the teat, the adjustment of vacuum between the inner of the teat cup and the vacuum in the milk flow line takes place and the ball is drawn away from the valve seat by the magnetic force. If the teat cup should fall off during milking, the turbulence in the teat cup will be so large when air rushes in into the teat cup that the magnetic influence on the ball is overcome and the ball is sucked against the valve seat of the connection piece. In this design of the teat cup, the ball is hindered from falling off the teat cup by providing the teat cup liner with a thickening above the connection piece.

In both of these designs of the proposed teat cup assembly, the connection piece to the milk transport line is situated below the pulsating vacuum line connection and extends at a right angle to the longitudinal axis of the teat cup. Of course some other angle may be chosen if that is suitable.

The rotatable bottom plate 10 of the teat cup according to Figure 1 is located as shown in the drawing during milking. When milking is ended and cleaning is to start, the bottom plate is turned so that the small peg 12 is situated outside the opening of the connection piece 5. This means that even when cleaning fluid rushes into the teat cup, the ball cannot seat against the opening of the connection piece. If the opening were to be closed, cleaning could not take place in the proper way. By exchanging the peg for a disc which can be positioned to cover the opening of the connection piece it is possible to obtain a positive closing of the connection when desired.

In the embodiments of the invention which have been described above, the valve body has the shape of a ball. Of course it is possible to give the valve body some other form, as for example a piston-like body with an extension out from the teat cup. The valve body is then lifted away from the valve seat after an adjustment of the vacuum depending on the lifting force on the valve body and its extension due to the pressure difference between atmospheric pressure and pressure within the teat cup being larger than the weight of the valve body. Should the teat cup fall off, the pressure conditions are equalized, such that the valve body falls down and closes the connection between the interior of the teat cup and the milk transport line. With such an arrangement it is possible to close the connection between the interior of the teat cup and the milk flow line manually by means of the extension of the valve body as desired.

**Claims**

1. Teat cup assembly (1) for a milking machine, including a liner (3) within the teat cup, connection pieces (4, 5) for pulsating vacuum and milk transport vacuum respectively, and a valve which is arranged to close the connection between the interior of the teat cup liner and the milk transport line in the event of the teat cup falling away from the teat during vacuum milking, the valve comprising a permanently open restricted passage (8) to connect the interior of the liner with the milk transport line even when the valve is closed, so that on positioning the assembly over a teat, pressure within the liner is reduced by air being extracted through the passage (8) causing the valve body (6) to be unseated and move to its open position, characterised in that the teat cup liner (3) includes a space situated out of the path of the milk flow for accommodating the valve body (6) in its open position so that it presents no obstruction to the flow of milk from the interior of the liner (3) to the milk transport line, and that the permanently open restricted passage (8) is formed in the sealing surface between the valve body (6) and its valve seat to achieve a self-rinsing effect.

2. Teat cup assembly according to claim 1, characterised in that the area available for milk passing the valve body (6) is at least as great as the cross-section area of the connection piece (5) to the milk transport line.

3. Teat cup assembly according to claim 1 or 2, characterised in that the valve housing is formed as an integral part of the teat cup liner (3).

4. Teat cup assembly according to any preceding claim, characterised in that the said restricted passage (8) is formed in a seat for the valve body (6).

5. Teat cup assembly according to any preceding claim, characterised in that the valve body includes a spherical surface which, in the position in which the connection is closed, abuts a valve seat, which is formed on the inner end of the connection piece (5) to the milk transport line.

6. Teat cup assembly according to any preceding claim characterised in that the said space is arranged below the connection piece (5) to the milk transport line.

7. Teat cup assembly according to any preceding claim characterised in that movement of the valve body (6) to the said space takes place under the influence of a force which works in the opening direction of the valve body (6), e.g. gravity or magnetic force.

8. Teat cup assembly according to any one of the preceding claims, characterised in that the valve (6) may be opened and/or closed manually.

9. Teat cup assembly according to any one of the preceding claims, characterised in that the connecting piece (5) to the milk flow line is arranged at an angle to the longitudinal axis of the teat cup assembly.

## Patentansprüche

1. Melkbecheranordnung (1) für eine Melkmaschine, mit einer Auskleidung (3) im Melkbecher, mit Verbindungsstücken (4, 5) zum Pulsationsvakuum bzw. zum Milchtransportvakuum, und mit einem Ventil, welches dazu eingerichtet ist, die Verbindung zwischen dem Inneren der Melkbecherauskleidung und der Milchtransportleitung zu schließen, wenn der Melkbecher während des Unterdruckmelkens von der Zitze abfällt, wobei das Ventil einen ständig offenen gedrosselten Kanal (8) aufweist, um das Innere der Auskleidung mit der Milchtransportleitung zu verbinden, selbst wenn das Ventil geschlossen ist, so daß beim Aufsetzen der Anordnung auf die Zitze der Druck innerhalb der Auskleidung verringert wird durch Luft, die durch den Kanal (8) abgezogen wird, wodurch der Ventilkörper (6) von seinem Sitz abgehoben und in seine offene Stellung bewegt wird, dadurch gekennzeichnet, daß die Melkbecherauskleidung (3) einen Raum einschließt, der außerhalb des Weges der Milchströmung angeordnet ist, um den Ventilkörper (6) in seiner öffnenden Position aufzunehmen, so daß er kein Hindernis für die Milchströmung von dem Inneren der Auskleidung (3) zu der Milchtransportleitung darstellt, und daß der ständig offene, gedrosselte Kanal (8) in der Dichtfläche zwischen dem Ventilkörper (6) und seinem Ventilsitz ausgebildet ist, um einen selbstreinigenden Effekt zu erzielen.

2. Melkbecheranordnung nach Anspruch 1, dadurch gekennzeichnet, daß die Fläche, die der Milch zum Passieren des Ventilkörpers (6) zur Verfügung steht, wenigstens so groß ist wie die Querschnittsfläche des Verbindungsstückes (5) zu der Milchtransportleitung.

3. Melkbecheranordnung nach Anspruch 1 oder 2, dadurch gekennzeichnet, daß das Ventilgehäuse als ein integraler Teil der Melkbecherauskleidung (3) ausgebildet ist.

4. Melkbecheranordnung nach einem der voranstehenden Ansprüche, dadurch gekennzeichnet, daß der gedrosselte Kanal (8) in einem Sitz für den Ventilkörper (6) ausgebildet ist.

5. Melkbecheranordnung nach einem der voranstehenden Ansprüche, dadurch gekennzeichnet, daß der Ventilkörper eine sphärische Oberfläche einschließt, die in derjenigen Position, in der die Verbindung geschlossen ist, am Ventilsitz anliegt, der am inneren Ende des Verbindungsstückes (5) zu der Milchtransportleitung ausgebildet ist.

6. Melkbecheranordnung nach einem der voranstehenden Ansprüche, dadurch gekennzeichnet, daß der genannte Raum unterhalb des Verbindungsstückes (5) zu der Milchtransportleitung angeordnet ist.

7. Melkbecheranordnung nach einem der voranstehenden Ansprüche, dadurch gekennzeichnet, daß eine Verschiebung des Ventilkörpers (6) in den genannten Raum unter dem Einfluß einer Kraft stattfindet, die in der Öffnungsrichtung des Ventilkörpers (6) wirkt, beispielsweise durch Schwerkraft oder Magnetkraft.

8. Melkbecheranordnung nach einem der voranstehenden Ansprüche, dadurch gekennzeichnet, daß das Ventil (6) von Hand geöffnet und/oder verschlossen werden kann.

9. Melkbecheranordnung nach einem der voranstehenden Ansprüche, dadurch gekennzeichnet, daß das Verbindungsstück (5) zu der Milchstromleitung unter einem Winkel zu der Längsachse der Melkbecheranordnung angeordnet ist.

## Revendications

1. Manchon trayeur (1) pour machine à traire, comprenant une garniture (3) logée dans ce manchon, des pièces (4, 5) assurant respectivement le raccordement à une dépression pulsatoire et à une dépression de transport du lait, ainsi qu'une valve conçue pour fermer la jonction entre l'intérieur de la garniture du manchon trayeur et le conduit de transport du lait pour le cas où le manchon trayeur tomberait à l'écart du pis lors de la traite par dépression, la valve présentant un passage (8) d'écoulement limité, ouvert en permanence pour faire communiquer l'intérieur de la garniture avec le conduit de transport du lait même lorsque la valve est fermée, de telle sorte que, lorsque le manchon est placé sur un pis, la pression régnant à l'intérieur de la garniture soit réduite par l'air expulsé à travers le passage d'écoulement (8), en provoquant le décollement du corps obturateur (6) à l'écart de son siège, et son mouvement à la position ouverte, caractérisé par le fait que la garniture (3) du manchon trayeur comporte un espace relégué hors du trajet d'écoulement du lait afin de loger le corps obturateur (6), dans sa position ouverte, de façon qu'il n'oppose aucune obstruction à l'écoulement du lait de l'intérieur de la garniture (3) vers le conduit de transport du lait; et par le fait que le passage (8) d'écoulement limité, ouvert en permanence, est formé dans la surface d'étanchéité entre le corps obturateur (6) et son siège de valve, pour prodiguer un effet d'auto-rinçage.

2. Manchon trayeur selon la revendication 1, caractérisé par le fait que la superficie disponible pour l'écoulement du lait franchissant le corps obturateur (6) est au moins égale à la superficie de la section de la pièce (5) de raccordement au conduit de transport du lait.

3. Manchon trayeur selon la revendication 1 ou 2, caractérisé par le fait que le carter de valve est formé en tant que partie intégrante de la garniture (3) de ce manchon.

4. Manchon trayeur selon l'une quelconque des revendications précédentes, caractérisé par le fait que ledit passage (8) d'écoulement limité est formé dans un siège pour le corps obturateur (6).

5. Manchon trayeur selon l'une quelconque des revendications précédentes, caractérisé par le fait que le corps obturateur présente une surface sphérique qui, dans la position dans laquelle la jonction est fermée, bute contre siège de valve ménagé sur l'extrémité interne de la pièce (5) de raccordement au conduit de transport du lait.

6. Manchon trayeur selon l'une quelconque des revendications précédentes, caractérisé par le fait que ledit espace est situé au-dessous de la pièce (5) de raccordement au conduit de transport du lait.

7. Manchon trayeur selon l'une quelconque des revendications précédentes, caractérisé par le fait qu'un mouvement du corps obturateur (6) vers ledit espace a lieu sous l'influence d'une force qui agit dans le sens de l'ouverture de ce corps obturateur (6), par exemple la gravité ou une force magnétique.

8. Manchon trayeur selon l'une quelconque des revendications précédentes, caractérisé par le fait que la valve (6) peut être ouverte et/ou fermée à la main.

9. Manchon trayeur selon l'une quelconque des revendications précédentes, caractérisé par le fait que la pièce (5) de raccordement au conduit de circulation du lait est disposée selon un angle par rapport à l'axe longitudinal dudit manchon trayeur.

Fig. 1

Fig. 2